# EUROPEAN PATENT APPLICATION

(11) **EP 4 636 521 A1**
(43) Date of publication of application: **22.10.2025**
(21) Application number: 25169766.0
(22) Date of filing: 10.04.2025
(51) Int. Cl.: G05B 23/02, G06F 3/04817

(54) **INFORMATION PROCESSING DEVICE AND MONITORING SYSTEM**

(30) Priority: 16.04.2024 JP 2024066250
(71) Applicant: Sintokogio, Ltd., Aichi 450-6424 (JP)
(72) Inventor: NISHIGAKI, Tomo, Nagoya-shi (JP); AOKI, Hidenao, Nagoya-shi (JP); NAKAZAWA, Kazuya, Nagoya-shi (JP)
(74) Representative: Bittner, Thomas L.

(57) **Abstract**

An information processing device (1) carries out: an obtaining step (S1) of obtaining detection information from a plurality of sensors (2) provided in a monitoring target area and positional information indicating positions of the plurality of sensors; an encapsulation step (S2) of encapsulating the detection information and the positional information; a conversion step (S3) of converting, into vector data, conversion data including the detection information and the positional information that have been encapsulated; and an output step (S4) of carrying out a process for displaying and superimposing an icon (i) of each of the plurality of sensors which is based on the vector data, on a map showing the monitoring target area.

## Description

### Technical Field

The present invention relates to an information processing device and a monitoring system.

### Background

Conventionally, for example, a state monitoring system as disclosed in JP 7320233 has been known. The processor of this system obtains detection results from a plurality of state sensors that are installed and arranged at a plurality of locations and that detect information affecting the states of the plurality of locations. The processor grasps state information indicating a state of each location based on the detection result. The processor obtains information on the floor map including sections. The processor sets, for the sections in the information on the floor map, areas that correspond to detection capabilities of the respective state sensors and that have been specified by the user. The processor causes the displaying corresponding to the grasped state information for each section or each area in the information on the floor map to be performed.

Further, a factory equipment resource information management system as disclosed in JP 2001-243295 has been known. An intra-factory resource information displaying means of this system displays, on a window, a factory equipment layout on the basis of map data. The intra-factory resource information displaying means also displays, on a window, information based on the corresponding predetermined map data, government notice information, or resource information of the factory, in response to predetermined designation for a displayed element including the factory equipment layout displayed. The data on the layout handled by this system is CAD data.

### Summary

### Technical Problem

However, the system, as disclosed in JP 7320233, which causes a floor map to perform displaying corresponding to state information has often generated the floor map and an image corresponding to the state information in a bitmap format. Therefore, the conventional system needs to generate the floor map and the image corresponding to the state information anew every time the detection result from the sensor changes. The process of generating the image anew requires time and effort and is one cause of delayed displaying of the image.

The system handling CAD data (vector data) as disclosed in JP 2001-243295 enables a layout to be generated with less time and effort than a case where one in a bitmap format is generated. However, the conventional system handling CAD data has a problem in that in a case where displaying an image based on information obtained from outside (for example, data from a sensor or the like), it takes time and effort to convert the data into CAD data. In particular, when data is obtained from different sources, methods for converting data into CAD data may differ from each other. The process of converting data by different conversion methods requires more time and effort and may interfere with displaying of an image.

An aspect of the present invention has been made in light of the foregoing problem, and it is an object thereof to reduce time and effort for displaying an image based on information from a plurality of sensors provided in a monitoring target area.

### Solution to Problem

In order to attain the foregoing object, an information processing device in accordance with an aspect of the present invention includes a processor carrying out: an obtaining step of obtaining detection information from each of a plurality of sensors provided in a monitoring target area and positional information indicating a position of each of the plurality of sensors; an encapsulation step of encapsulating the detection information and the positional information; a conversion step of converting, into vector data, conversion data including the detection information and the positional information that have been encapsulated; and an output step of carrying out a process for displaying and superimposing an icon of each of the plurality of sensors which is based on the vector data, on a map showing the monitoring target area.

A monitoring system in accordance with another aspect of the present invention includes: one or more sensors provided in a monitoring target area; and the information processing device.

### Advantageous Effects of Invention

Each aspect of the present invention makes it possible to reduce time and effort for displaying an image based on information from a plurality of sensors provided in a monitoring target area.

### Brief Description of Drawings

- Fig. 1: is a view illustrating a configuration of one example of a monitoring system in accordance with an embodiment of an aspect of the present invention.
- Fig. 2: is a block diagram illustrating one example of an electrical configuration of an information processing device included in the system.
- Fig. 3: is a flowchart illustrating one example of a flow of a process carried out by a processor included in the device.
- Fig. 4: is a view illustrating one example of encapsulation of detection information which is carried out by the device.
- Fig. 5: is a view illustrating one example of conversion of detection information and positional information that have been encapsulated, into vector data which is carried out by the device.
- Fig. 6: is a view illustrating one example of a map displayed by a displaying section of a monitoring system in accordance with the embodiment.
- Fig. 7: is a view illustrating one example of a setting screen displayed by the displaying section.
- Fig. 8: is a view illustrating one example of a detail information screen displayed by the displaying section.

### Description of Embodiments

The following description will discuss an embodiment of the present invention in detail with reference to the drawings.

### <Monitoring system>

First, the following description will discuss a monitoring system.

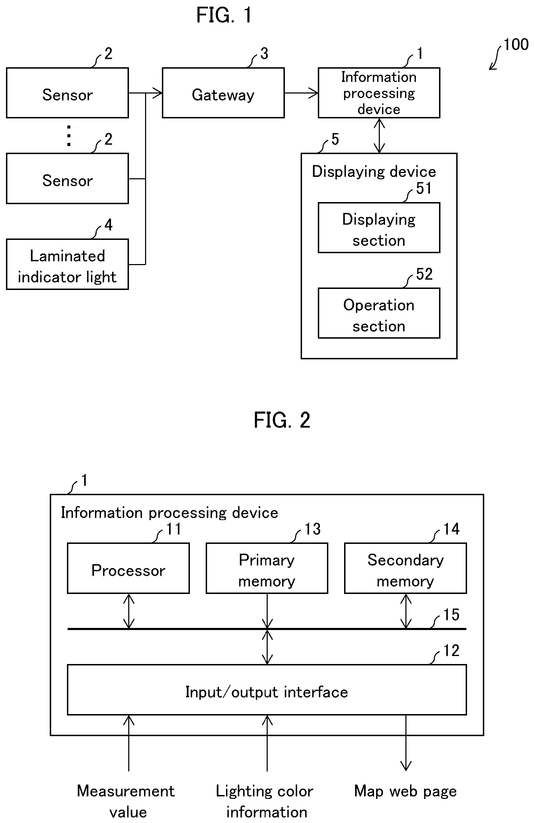

A monitoring system 100 is used to allow a user to monitor a state within a monitoring target area. One example of the monitoring target area is a factory, although not particularly limited. As illustrated in Fig. 1, the monitoring system 100 includes an information processing device 1 and one or more sensors 2. The monitoring system 100 in accordance with the present embodiment further includes a gateway 3 and a displaying device 5.

### [Information processing device]

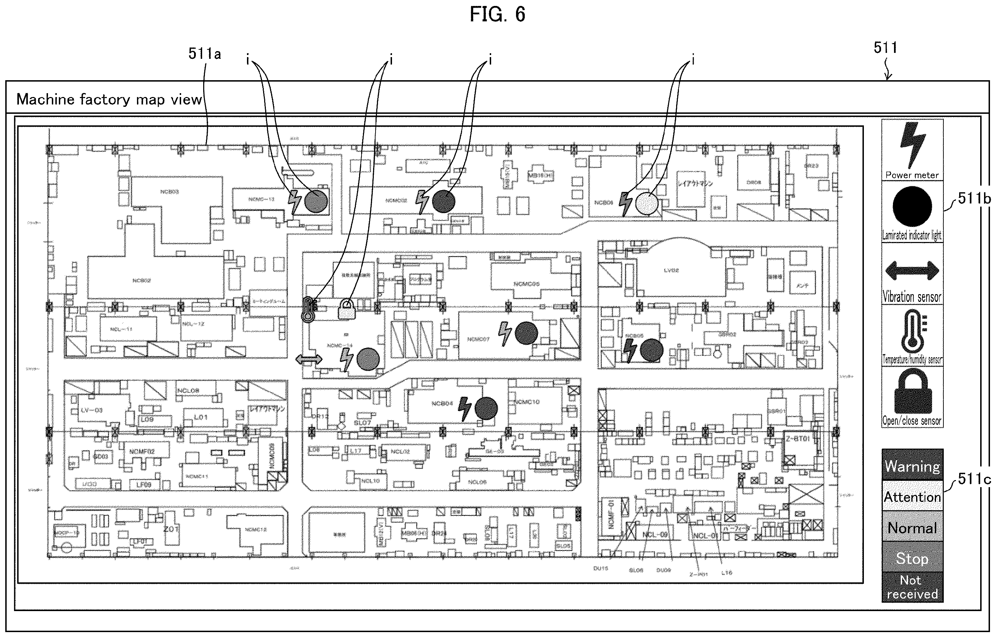

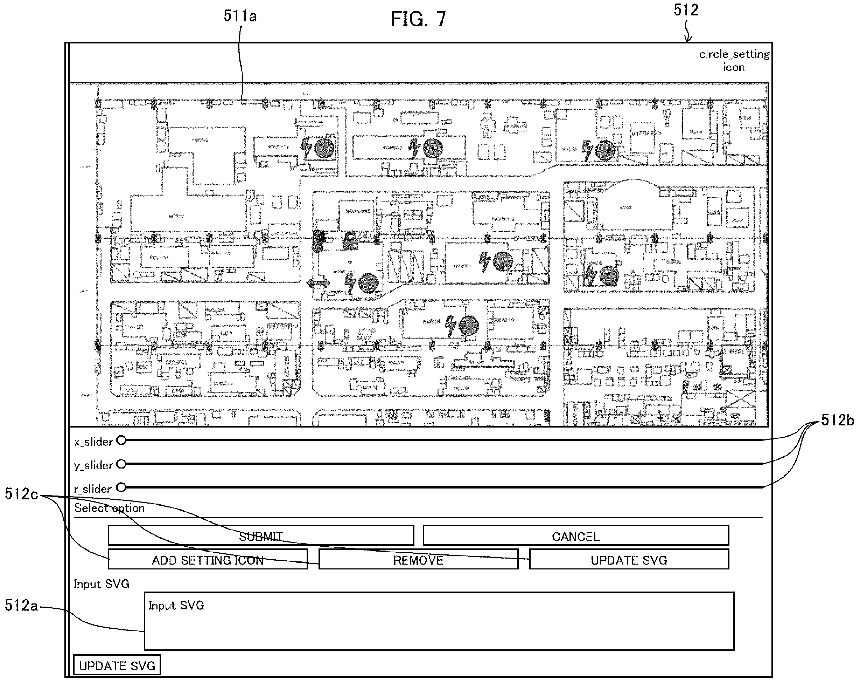

The information processing device 1 controls displaying of a map 511a (see Figs. 6 and 7) based on detection information from the sensors 2. The details of the map will be discussed later. The information processing device 1 in accordance with the present embodiment is constituted by a server providing a cloud service. That is, the information processing device 1 is connected to a configuration other than the information processing device 1 in the monitoring system 100 via the Internet. Note that the information processing device 1 may be configured by, for example, a typical personal computer (PC), a mobile terminal, or a dedicated device. In this case, the information processing device 1 may be installed within the monitoring target area or in the vicinity of the monitoring target area. The details of the operation of the information processing device 1 will be discussed later.

### [Sensor]

A plurality of sensors 2 are provided within the monitoring target area. In a case where the monitoring target area is a factory, the sensors 2 are provided, for example, in various pieces of equipment (such as machines) inside the factory and on a wall, a ceiling, and a door of the building. Each of the plurality of sensors 2 is connected to the information processing device 1. The connection between the sensor 2 and the information processing device 1 may be made in a wired manner or may be made in a wireless manner. Each of the plurality of sensors 2 measures a target and transmits a value from the measurement, to the information processing device 1. Examples of the sensors 2 include a power meter (power sensor), a vibration sensor, a temperature/humidity sensor, an open/close sensor, and an operation monitor. The power meter detects a power consumed in the equipment provided with the power meter. The vibration sensor detects a magnitude of vibration of the equipment provided with the vibration sensor. The temperature/humidity sensor detects temperature and humidity in a space around the temperature/humidity sensor. The open/close sensor is provided on a door and detects opening and closing of the door. The operation monitor detects an operation state of the machine provided with the operation monitor.

The sensors 2 include laminated indicator lights 4. The laminated indicator lights 4 are each provided in a machine or in the vicinity of the machine. Each of the laminated indicator lights 4 is connected to the information processing device 1. The connection between the laminated indicator light 4 and the information processing device 1 may be made in a wired manner or may be made in a wireless manner. The laminated indicator light 4 measures an operation state of the machine provided with the laminated indicator light and transmits a value from the measurement, to the information processing device 1. That is, the laminated indicator light 4 is one aspect of the operation monitor. The laminated indicator light 4 lights up in a color corresponding to an operation state of the machine (a color based on the measurement value measured by the laminated indicator light 4 itself). The laminated indicator light 4 may be configured to transmit lighting color information to the information processing device 1, instead of transmitting the measurement value or together with the measurement value. The lighting color information is information indicating the current lighting color of the laminated indicator light 4.

Examples of the sensors 2 may include a human sensor, a blocking sensor, an acceleration sensor, and a mat sensor, as well as the power meter, the vibration sensor, the temperature/humidity sensor, and the open/close sensor. The human sensor detects that a person has entered a predetermined range. The blocking sensor includes a light emitting section configured to emit light and a light receiving section configured to receive light from the light emitting section and detects whether the light from the light emitting section is blocked. An acceleration sensor is provided in a building or equipment and detects an acceleration acting on the building or equipment. A mat sensor is provided on the floor and detects the magnitude of a load from a person or object passing over it. The plurality of sensors 2 may be of the same type or may be of types different from each other. Alternatively, at least two of the plurality of sensors 2 may be of the same type and the other sensors 2 may be of types different from each other.

### [Gateway]

The gateway 3 collects the measurement values from the sensors 2 and transmits the measurement values to the information processing device 1. In a case where the sensors 2 include the laminated indicator lights 4, and the laminated indicator lights 4 are each configured to output lighting color information, the gateway 3 acquires the lighting color information from the laminated indicator light 4 and transmits the lighting color information to the information processing device 1. The gateway 3 in accordance with the present embodiment is constituted by, for example, a router.

### [Displaying device]

The displaying device 5 communicates with the information processing device 1. The communication between the displaying device 5 and the information processing device 1 may be made in a wired manner or may be made in a wireless manner. The displaying device 5 in accordance with the present embodiment includes a browser. The displaying device 5 receives data on a web page of the map 511a showing the monitoring target area from the information processing device 1 and displays, on the displaying section 51, the map 511a based on the data. Note that the displaying device 5 may display the map 511a with use of an application other than a browser. Note that in a case where the information processing device 1 includes a displaying section, the monitoring system 100 may not include the displaying device 5.

The displaying device 5 in accordance with the present embodiment includes an operation section 52 that can be operated by the user. The operation section is constituted by, for example, a keyboard, a pointing device (such as a mouse), and a touch panel. The displaying device 5 receives various operations by the user via the operation section 52. The operations received by the displaying device 5 include, for example, a threshold setting operation, a map adding operation, an icon adding operation, a changing operation, and an information displaying operation.

The threshold setting operation is an operation of setting thresholds to the information processing device 1. The threshold setting operation is carried out, for example, after an icon i of a sensor has been set or before the threshold for the sensor 2 set is changed. The threshold is a value used for comparison with a measurement value from each of the sensors 2 described later. In the threshold setting operation in accordance with the present embodiment, a first threshold and a second threshold larger than the first threshold are set for each type of the sensors 2. Note that the number of the thresholds set may be one or may be three or more. When values serving as the thresholds are inputted via the operation section 52, the displaying device 5 transmits the values to the information processing device 1. The information processing device 1 which has received the values sets the values as the thresholds of the corresponding sensor 2.

The details of the map adding operation, the icon adding operation, the changing operation, and the information displaying operation will be described later. Note that in a case where the information processing device includes an input section, or in a case where the monitoring system 100 includes an independent input device which can be operated by the user, the displaying device 5 may not include the operation section.

### <Details of information processing device>

Next, the following description will discuss details of the information processing device 1.

### [Configuration of information processing device]

As illustrated in Fig. 2, the information processing device 1 includes a processor 11. The information processing device 1 in accordance with the present embodiment further includes an input/output interface 12, a primary memory 13, and a secondary memory 14. The processor 11, the input/output interface 12, the primary memory 13, and the secondary memory 14 are connected via a bus 15.

### [Input/output interface]

The input/output interface 12 connects the plurality of sensors 2 and the processor 11. To the input/output interface 12, the measurement values from the plurality of sensors 2 are inputted. The input/output interface 12 connects the displaying device 5 and the processor 11. From the input/output interface 12, a result of processing of the processor 11 is outputted to the displaying device 5.

### [Primary memory/secondary memory]

The primary memory 13 stores a control program. The secondary memory 14 temporarily stores various information obtained by the processor 11 from the sensors 2, the laminated indicator light 4, and the like.

### [Processor]

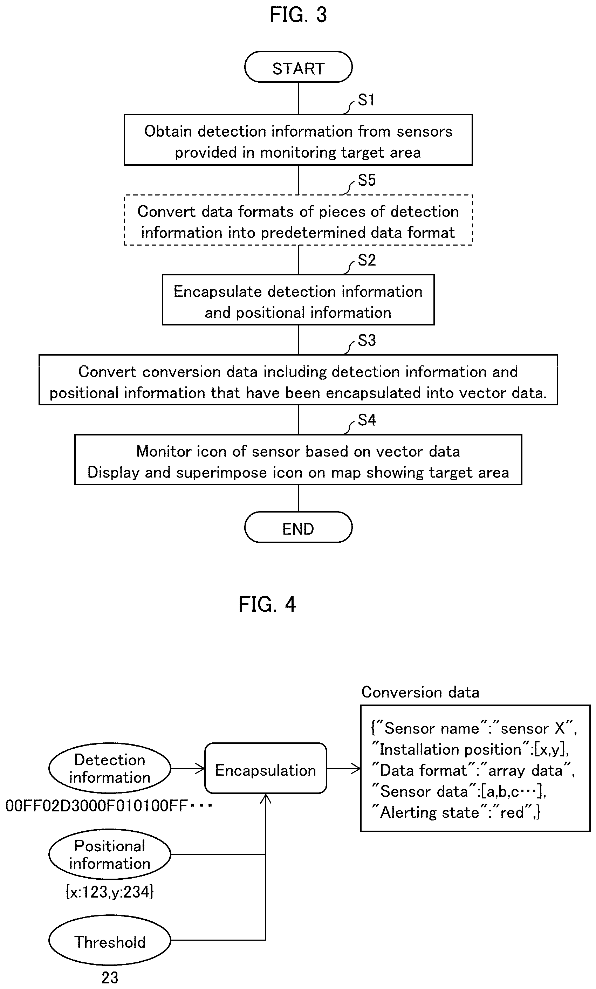

The processor 11 controls operation of the information processing device 1. As illustrated in Fig. 3, the processor 11 in accordance with the present embodiment carries out an obtaining step S1, an encapsulation step S2, a conversion step S3, and an output step S4 in accordance with the control program stored in the primary memory 13. The processor 11 in accordance with the present embodiment further carries out a second output step S5. The processor 11 in accordance with the present embodiment repeatedly carries out the obtaining step S1, the encapsulation step S2, the conversion step S3, and the output step S4.

### (Obtaining step)

First, in the obtaining step S1, the processor 11 obtains detection information from the sensors 2. The "detection information" includes the measurement values (levels of signals) of the sensors 2. In a case where the plurality of sensors 2 are provided in the monitoring target area, the processor 11 obtains the detection information from each of the plurality of sensors 2 in the obtaining step S1. In a case where the sensors 2 include the laminated indicator lights 4, and the laminated indicator lights 4 are each configured to output the lighting color information, the "detection information" may include the lighting color information.

In the obtaining step S1, the processor 11 further obtains positional information. The positional information is information indicating positions of the sensors 2. The "information indicating the positions" includes, for example, plane coordinates (x, y) with a reference (original point) such as a predetermined location in the monitoring target area. Even in a case where the sensors 2 are moved, this makes it possible to immediately reflect the movement to the arrangement of the icons i. Note that in a case where the positional information is set in advance in the information processing device 1, the processor 11 may not obtain positional information in the obtaining step S1.

### (Encapsulation step)

After the detection information has been obtained, the processor 11 carries out the encapsulation step S2. In the encapsulation step S2, the processor 11 encapsulates the detection information and the positional information. In the encapsulation step S2 in accordance with the present embodiment, the processor 11 encapsulates the detection information, the positional information, and type information. The type information is information indicating the type of each of the sensors 2 (for example, the name of the sensor). The type information is set by carrying out the icon adding operation described later. Hereinafter, the information including at least the detection information and the positional information that have been encapsulated is referred to as conversion data.

In a case where the detection result is a measurement value, the processor 11 first compares, in the encapsulation step S2 in accordance with the present embodiment, the measurement value with the thresholds inputted for each of the sensors 2 in advance. The processor 11 then generates aspect information on the basis of a result of the comparison with the thresholds. The aspect information is information indicating an aspect of an icon i. In the encapsulation step S2 in accordance with the present embodiment, the processor 11 generates the aspect information indicating the color of the icon i. Specifically, in a case where the measurement value is less than the first threshold value, the processor 11 generates the aspect information indicating a normal aspect (e.g., green). In a case where the measurement value is equal to or greater than the first threshold and less than the second threshold value, the processor 11 generates the aspect information indicating an attention-grabbing aspect (e.g., yellow). In a case where the measurement value is less than the second threshold value, the processor 11 generates the aspect information indicating a warning aspect (e.g., red). The processor 11 then encapsulates the measurement value, the positional information, and the aspect information. Specifically, for example, as illustrated in Fig. 4, the processor 11 generates, from the detection information (measurement value), the positional information, and the thresholds, the conversion data including a collection of the type information, the positional information, the data format, the detection information, and the aspect information that have been encapsulated. Note that the aspect information may be information indicting, for example, a size of the icon i.

In a case where the detection result is lighting color information, the processor 11 encapsulates, in the encapsulation step in accordance with the present embodiment, the lighting color information and the positional information indicating a position of the laminated indicator light 4. Specifically, the processor 11 generates, from the detection information (lighting color information) and the positional information, the conversion data including a collection of the type information, the positional information, the data format, and the detection information that have been encapsulated.

When encapsulating the detection data and the like, the processor 11 standardizes the data formats of the pieces of detection information into a predetermined data format. This allows, even when the data formats of the pieces of detection information outputted from the sensors 2 are different due to, for example, difference of the manufacturers of the sensors 2, the data formats of the conversion data to be the same irrespective of the sensors 2. Therefore, the processor 11 makes it possible to easily perform conversion into vector data in the conversion step S3 described later.

### (Conversion step)

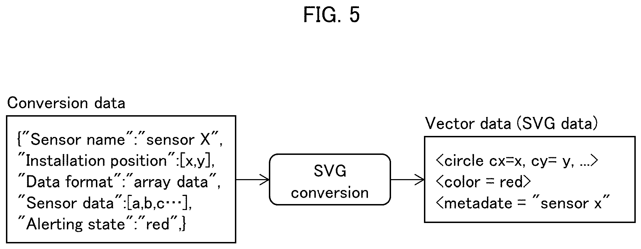

After generating the conversion data, the processor 11 carries out the conversion step S3, as illustrated in Fig. 3. In the conversion step S3, the processor 11 converts the conversion data generated in the encapsulation step S2 into vector data. In the conversion step S3 in accordance with the present embodiment, the processor 11 converts the conversion data into the vector data in the scalable vector graphics (SVG) format, as illustrated in Fig. 5. The processor 11 may convert the conversion data into vector data in another format (for example, an Al format, an INDD format, a PDF format, an EPS format, a DFX format, or a DWF format).

### (Output step)

After converting the detection information into the vector data, the processor 11 carries out the output step S4, as illustrated in Fig. 3. In the output step S4, the processor 11 carries out a process for causing the icon i of each of the sensors 2 based on the vector data to be displayed and superimposed on the map 511a showing the monitoring target area. In the output step S4 in accordance with the present embodiment, the processor 11 generates data on the web page of the map 511a on which the icon i is displayed and superimposed, and transmits the data to the displaying device 5. The displaying device 5 which has received the data displays the map displaying screen 511 on the displaying section 51. For example, as illustrated in Fig. 6, the map displaying screen 511 shows the map 511a, an icon legend 511b, and a state legend 511c. The map 511a shows, in plan view, the arrangement and shape of, for example, the equipment and passages provided in the monitoring target area. The icons i are superimposed on the map 511a. The icon legend 511b indicates a correspondence between the shapes of the icons i and the types of the sensors 2. The state legend 511c indicates a correspondence between the colors of the icons i and states of measurement targets of the sensors 2.

As described above, in the encapsulation step S2 in accordance with the present embodiment, the processor 11 encapsulates the detection information, the positional information, and the type information (generates the conversion data including the type information encapsulated). Therefore, in the output step S4 in accordance with the present embodiment, the processor 11 carries out a process for displaying and superimposing the icon i in a shape corresponding to the type information. Specifically, the processor 11 forms the icon i of the power meter into, for example, a shape designed to represent the image of electricity. The icon i of the laminated indicator light 4 is formed into, for example, the shape thereof in plan view (circle). The icon i of the vibration sensor is formed into, for example, a shape designed to represent the image of vibration (arrow). The icon i of the temperature/humidity sensor is formed into, for example, a shape designed to resemble a thermometer. Further, the icon i of the open/close sensor is formed into, for example, a shape of a lock. This causes the icon i having a shape corresponding to the type of each of the sensors 2 to be displayed and superimposed on the map 511a. This enables a user of the monitoring system 100 to easily understand what a sensor 2 corresponding to the icon i on which the user is focusing detects.

As described above, in the encapsulation step S2 in accordance with the present embodiment, the processor 11 encapsulates the measurement value, the positional information, and the aspect information (generates the conversion data including the aspect information encapsulated). Therefore, in the output step S4 in accordance with the present embodiment, the processor 11 carries out a process for causing the icon i to be displayed and superimposed, on the map 511a, in an aspect corresponding to the aspect information generated in the encapsulation step S2. As described above, the aspect information in accordance with the present embodiment is information indicating the color of the icon i. Therefore, in the output step S4 in accordance with the present embodiment, the processor 11 generates the icon i in the color indicated by the aspect information and causes the icon i to be displayed and superimposed on the map 511a. This causes the icon i in an aspect corresponding to a magnitude of the measurement values from each of the sensors 2 to be displayed and superimposed on the map 511a. This enables the user of the monitoring system 100 to easily understand a state of the target provided with the sensor 2.

As described above, in a case where the sensors 2 include the laminated indicator lights 4, and the laminated indicator lights 4 are each configured to output lighting color information, the processor 11 may obtain the lighting color information as the detection information from the laminated indicator light 4 in the obtaining step S1. In this case, in the output step S4, the processor 11 carries out a process for causing the icon i of the laminated indicator light 4 based on the vector data to be displayed and superimposed, on the map 511a, in the color corresponding to the lighting color information. This causes the icon i of the laminated indicator light 4 in the same color as that of the lighting of the laminated indicator light 4 to be displayed and superimposed on the map 511a. This enables the user of the monitoring system 100 to easily understand a condition of the equipment provided with the laminated indicator light 4.

Further, as described above, the displaying device 5 may be subjected to a predetermined map adding operation by the user. The map adding operation is an operation of setting a map 511a to the information processing device 1. The map adding operation is carried out, for example, before the monitoring target area is monitored in the first time or after addition/change has been made to the monitoring target area. When a predetermined screen calling operation is carried out, the processor 11 displays a setting screen 512 on the displaying section 51. For example, as illustrated in Fig. 7, a data input section 512a is displayed on the setting screen 512 in addition to the map 511a similar to the map displaying screen 511. The data input section 512a is configured to allow vector data showing the map 511a to be inputted in a text form. The map adding operation in accordance with the present embodiment is to input vector data to the data input section 512a. In a case where a map adding operation is carried out, the processor 11 carries out, in the output step S4, a process of displaying a new map 511a on which the icons i are displayed and superimposed. When the vector data showing the map 511a is inputted via the operation section 52, the displaying device 5 transmits the vector data to the information processing device 1. The information processing device 1 which has received the vector data sets a map 511a based on the vector data, as the map 511a of the monitoring target area. Thus, the displaying device 5 displays the new map 511a added. This enables, even in a case where the monitoring target area is changed (such as change in arrangement of the equipment, or expansion or reduction of the monitoring target area), the user of the monitoring system to immediately grasp the change.

As described above, the displaying device 5 may be subjected to a predetermined icon adding operation by the user. The icon adding operation is an operation of setting type information to the information processing device 1. The icon adding operation is carried out, for example, before the monitoring target area is monitored in the first time or after addition/change has been made to the sensors 2 provided in the monitoring target area. The setting screen 512 also displays operation buttons 512c, in addition to the map 511a and the data input section 512a. The operation buttons 512c include, for example, an adding button (ADD SETTING ICON) to add an icon i, a removing button (REMOVE) to remove an icon i, and an update button (UPDATE SVG) to update a state of an icon i. The icon adding operation in accordance with the present embodiment is to specify the type of an icon i to be added, by touching or clicking the adding button. When the type of the icon i is specified, the displaying device 5 transmits the type information corresponding to the specified type, to the information processing device 1. The information processing device 1 which has received the type information sets the sensor 2 corresponding to the type information, as a communication target. In a case where the icon adding operation is carried out, the processor 11 carries out, in the output step S4, a process for displaying and superimposing the new icon i. This causes the new icon i to be additionally displayed and superimposed on the map 511a. This enables the user of the monitoring system to, even in a case where a new sensor 2 is added in the monitoring target area, immediately understand a state of the equipment or the like provided with the new sensor 2.

As described above, the displaying device 5 may be subjected to a predetermined changing operation on the icon i by the user. The setting screen 512 also displays sliders 512b, in addition to the map 511a and the data input section 512a. The sliders 512b slide in accordance with operation by the user. The sliders 512b include a slider for adjusting a position of an icon i in a transverse (X-axis) direction, a slider for adjusting a position of an icon i in a longitudinal (Y-axis) direction, and a slider for adjusting a size of an icon i. The changing operation in accordance with the present embodiment is to specify an icon i to be changed and slide a slider 512b. In a case where the changing operation is carried out, the processor 11 changes, in the output step S4, at least one of a displaying position in which the icon i is displayed and a size of the icon i in accordance with the content of the changing operation (a sliding amount of the slider). As a result, the icon i having the changed displaying position and/or size is displayed and superimposed on the map 511a. Therefore, in a case where the icon i is small and thus is difficult to view, the user can enlarge the icon i and make it easier to view the icon i. In a case where the user is to check, on the map 511a, the equipment on which the icon i is displayed and superimposed, the user can move the icon i displayed and superimposed.

Note that in the output step S4, the processor 11 may carry out a process of displaying the map 511a on the displaying section 51 included in the information processing device 1. In a case were separate data on the map 511a is provided, the processor 11 may generate only data on the icon i and may transmit the data to the displaying device 5 in the output step S4 or display the data on the displaying section 51 in the output step S4.

### (Second output step)

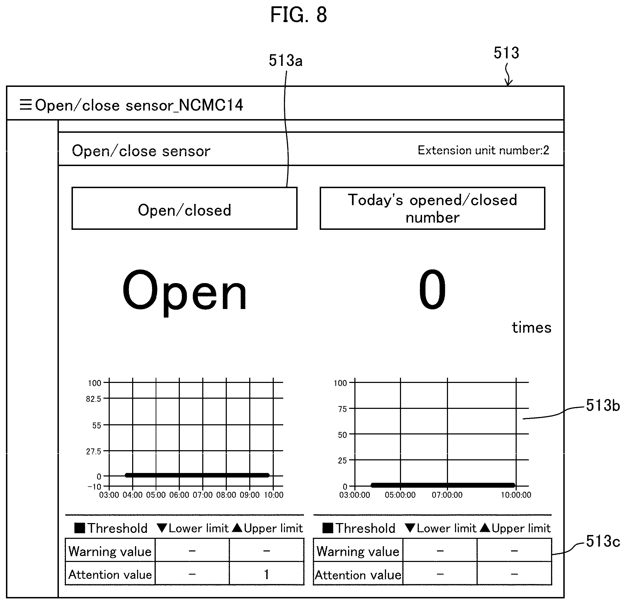

In a case where the icon i is subjected to a predetermined information displaying operation, the processor 11 further carries out the second output step S5. The "information displaying operation" involves, for example, click of the icon i using a pointing device and touch of a part on which an icon i is displayed in a touch panel. In the second output step S5, the processor 11 carries out a process of displaying detail information. The detail information is information indicating details related to the sensor 2 corresponding to the icon i. In the second output step S5 in accordance with the present embodiment, the processor 11 displays a detail information screen 513 on the displaying section 51. The processor 11 may display the detail information screen 513 instead of the map displaying screen 511 previously displayed or together with the map displaying screen 511. For example, as illustrated in Fig. 8, the detail information screen 513 displays a target condition 513a, a measurement value graph 513b, and thresholds 513c. The target condition 513a is a condition of a detection target based on the measurement value from the sensor 2 corresponding to the icon i. In a case where the sensor 2 is an open/close sensor, the target condition 513a is an open/closed state of the door to which the sensor 2 is mounted. In this case, the target condition 513a includes the number of times the door was opened on that day. The measurement value graph 513b is a graph showing time-based transition of the measurement value from the sensor 2. The thresholds 513c are thresholds (the first threshold and the second threshold) set for the sensor 2 corresponding to the icon i. This enables the user to easily understand a detailed condition of the sensor 2.

### [Effects of information processing device]

The information processing device 1 described above generates the conversion data for conversion into vector data, by encapsulating the detection information and the like. In this case, the information processing device 1 standardizes the data formats of the pieces of detection information into a predetermined data format. This allows, even when the data formats of the pieces of detection information outputted from the sensors 2 are different due to, for example, difference of the manufacturers of the sensors 2, the data formats of the conversion data to be the same irrespective of the sensors 2. Therefore, the information processing device 1 makes it possible to reduce time and effort for displaying an image (icon i) based on detection information from the plurality of sensors 2 provided in a monitoring target area. As a result, the map 511a and the icon i can be displayed on the displaying section 51 without delay and without fail (trouble).

### <Variations>

The present invention is not limited to the embodiments, but can be altered by a skilled person in the art within the scope of the claims. That is, the present invention also encompasses, in its technical scope, any embodiment derived by combining technical means disclosed in differing embodiments as appropriate.

For example, the information processing device 1 above includes one processor 11, and the one processor 11 carries out all of the obtaining step S1, the encapsulation step S2, the conversion step S3, and the output step S4. However, the information processing device 1 may be configured to include a plurality of processors and cause one processor to carry out some of these processes and the other processors to carry out the other processes. In this case, the information processing device 1 may be not a single device but a system in which a plurality of processors are dispersedly provided in a plurality of different devices.

Further, some or all of the functions of the processor 11 can be achieved also by a logic circuit. For example, the present invention encompasses, in its scope, an integrated circuit in which a logic circuit that functions as each of the control blocks is formed. In addition, the function of each of the control blocks can be realized by, for example, a quantum computer.

Aspects of the present invention can also be expressed as follows:
An information processing device in accordance with Aspect 1 of the present invention is configured to include a processor carrying out: an obtaining step of obtaining detection information from each of a plurality of sensors provided in a monitoring target area and positional information indicating a position of each of the plurality of sensors; an encapsulation step of encapsulating the detection information and the positional information; a conversion step of converting, into vector data, conversion data including the detection information and the positional information that have been encapsulated; and an output step of carrying out a process for displaying and superimposing an icon of each of the plurality of sensors which is based on the vector data, on a map showing the monitoring target area.

An information processing device in accordance with Aspect 2 of the present invention may be configured, in Aspect 1 above, such that the processor encapsulates, in the encapsulation step, the detection information, the positional information, and type information indicating the type of each of the plurality of sensors, and the processor carries out, in the output step, a process for displaying and superimposing the icon in a shape corresponding to the type information.

An information processing device in accordance with Aspect 3 of the present invention may be configured, in Aspect 1 or 2 above, such that the detection information includes a measurement value outputted from each of the plurality of sensors, and in the encapsulation step, the processor: compares the measurement value with a threshold for a corresponding one of the plurality of sensors; generates aspect information indicating an aspect of the icon on the basis of a result of comparison with the threshold; and encapsulates the measurement value, the positional information, and the aspect information, and in the output step, the processor carries out a process for displaying and superimposing, on the map, the icon in an aspect corresponding to the aspect information.

An information processing device in accordance with Aspect 4 of the present invention may be configured, in any one of Aspects 1 to 3 above, such that the plurality of sensors each include a laminated indicator light that is provided in a machine and that lights up in a color corresponding to an operation state of the machine, the detection information includes lighting color information indicating a lighting color of the laminated indicator light, in the encapsulation step, the processor encapsulates the lighting color information and positional information indicating a position of the laminated indicator light, and in the output step, the processor carries out a process for displaying and superimposing, on the map, an icon of the laminated indicator light based on the vector data in a color corresponding to the lighting color information.

An information processing device in accordance with Aspect 5 of the present invention may be configured, in any one of Aspects 1 to 4 above, such that in a case where a predetermined map adding operation is carried out, the processor carries out, in the output step, a process of displaying a new map on which the icon is displayed and superimposed.

An information processing device in accordance with Aspect 6 of the present invention may be configured, in any one of Aspects 1 to 5 above, such that in a case where a predetermined icon adding operation is carried out, the processor carries out, in the output step, a process for displaying and superimposing a new icon.

An information processing device in accordance with Aspect 7 of the present invention may be configured, in any one of Aspects 1 to 6 above, such that in a case where a predetermined changing operation is carried out on the icon, the processor changes, in the output step, at least one of a position in which the icon is displayed and a size of the icon in accordance with a content of the changing operation.

An information processing device in accordance with Aspect 8 of the present invention may be configured, in any one of Aspects 1 to 7 above, such that in a case where a predetermined information displaying operation is carried out on the icon, the processor further carries out a second output step of carrying out a process of displaying detail information indicating a detail of a sensor corresponding to the icon.

A monitoring system in accordance with Aspect 9 of the present invention may be configured, in any one of Aspects 1 to 8, to include: one or more sensors provided in a monitoring target area; and the information processing device.

## Claims

1. An information processing device comprising a processor, the processor carrying out:
- an obtaining step of obtaining detection information from each of a plurality of sensors provided in a monitoring target area and positional information indicating a position of each of the plurality of sensors;
- an encapsulation step of encapsulating the detection information and the positional information;
- a conversion step of converting, into vector data, conversion data including the detection information and the positional information that have been encapsulated; and
- an output step of carrying out a process for displaying and superimposing an icon of each of the plurality of sensors which is based on the vector data, on a map showing the monitoring target area.

2. The information processing device according to claim 1, wherein
- the processor encapsulates, in the encapsulation step, the detection information, the positional information, and type information indicating the type of each of the plurality of sensors, and
- the processor carries out, in the output step, a process for displaying and superimposing the icon in a shape corresponding to the type information.

3. The information processing device according to claim 1 or 2, wherein
- the detection information includes a measurement value outputted from each of the plurality of sensors,
- in the encapsulation step, the processor:
- compares the measurement value with a threshold for a corresponding one of the plurality of sensors;
- generates aspect information indicating an aspect of the icon on the basis of a result of comparison with the threshold; and
- encapsulates the measurement value, the positional information, and the aspect information, and
- in the output step, the processor carries out a process for displaying and superimposing, on the map, the icon in an aspect corresponding to the aspect information.

4. The information processing device according to any one of claims 1 to 3, wherein
- the plurality of sensors each include a laminated indicator light that is provided in a machine and that lights up in a color corresponding to an operation state of the machine,
- the detection information includes lighting color information indicating a lighting color of the laminated indicator light,
- in the encapsulation step, the processor encapsulates the lighting color information and positional information indicating a position of the laminated indicator light, and
- in the output step, the processor carries out a process for displaying and superimposing, on the map, an icon of the laminated indicator light based on the vector data in a color corresponding to the lighting color information.

5. The information processing device according to any one of claims 1 to 4, wherein in a case where a predetermined map adding operation is carried out, the processor carries out, in the output step, a process of displaying a new map on which the icon is displayed and superimposed.

6. The information processing device according to any one of claims 1 to 5, wherein in a case where a predetermined icon adding operation is carried out, the processor carries out, in the output step, a process for displaying and superimposing a new icon.

7. The information processing device according to any one of claims 1 to 6, wherein in a case where a predetermined changing operation is carried out on the icon, the processor changes, in the output step, at least one of a position in which the icon is displayed and a size of the icon in accordance with a content of the changing operation.

8. The information processing device according to any one of claims 1 to 7, wherein in a case where a predetermined information displaying operation is carried out on the icon, the processor further carries out a second output step of carrying out a process of displaying detail information indicating a detail of a sensor corresponding to the icon.

9. A monitoring system comprising:
- one or more sensors provided in a monitoring target area; and
- the information processing device according to any one of claims 1 to 8.
